# EUROPEAN PATENT SPECIFICATION

(11) **EP 3 699 883 B1**
(45) Date of publication and mention of the grant of the patent: **26.08.2026**
(21) Application number: 20169391.8
(22) Date of filing: 22.01.2015
(51) Int. Cl.: G08B 21/22, G08B 21/02, G06Q 90/00, H04W 4/029, G08B 7/06, G08B 27/00

(54) **SYSTEM AND METHOD FOR LOCATION TAGGED HEADCOUNT ACCOUNTING**
SYSTEM UND VERFAHREN ZUM ORTEN VON MARKIERTER MITARBEITERZAHLABRECHNUNG
SYSTÈME ET PROCÉDÉ DE COMPTABILITÉ DE DÉNOMBREMENT DES EFFECTIFS ÉTIQUETÉS DE LOCALISATION

(30) Priority: 05.02.2014 US 201414173423
(43) Date of publication of application: 26.08.2020
(62) Document number(s) of the earlier application(s) in accordance with Art. 76 EPC: 15152220.8 / 2 905 760
(73) Proprietor: Honeywell International Inc., Morris Plains, NJ 07950 (US)
(72) Inventor: Kamalakannan, Arunkumar, Morristown, NJ 07962-2245 (US); Kumar, Nukala Sateesh, Morristown, NJ NJ 07962-2245 (US); Gulaguli, Shashikant G., Morristown, NJ 07962-2245 (US)
(74) Representative: Haseltine Lake Kempner LLP

(56) References cited:
- WO-A2-2005/104724
- WO-A2-2007/145890
- WO-A2-2010/117849
- US-A1- 2007 159 332
- US-A1- 2009 253 402

## Description

### FIELD

The present invention relates to a safety system and a method of tracking persons via their proximity to other persons in a safety system.

### BACKGROUND

Safety systems are generally known. Such systems are typically used to detect threats within a secured area.

In order to detect threats, a number of sensors may be distributed throughout the secured area. The sensors may include smoke detectors, intrusion detectors or any of a number of other types of sensors intended to detect threats to life and safety.

The sensors may be monitored by a local control panel. Upon detection of activation of one of the sensors, the control panel may send an alarm message to a central monitoring station identifying a geographic location of the secured area and the type of threat. The central monitoring station may respond by summoning the appropriate help (e.g., fire department, police department, etc.).

In addition to monitoring the sensors, the local control panel may also include a display with an indicator light for each sensor along with text that suggests a location of each sensor. Upon activation of any sensor, a light on the control panel may be activated in order to allow security personnel to quickly address the threat.

While existing safety systems work well in identifying threats, they are not very well equipped to identify people at risk from the detected threat. Accordingly, a need exist for better methods of aiding emergency personnel in helping people at risk from safety threats.

WO 2005/104724 A2 discloses an occupant management method, system, and program product that associate occupant information with information about a physical area. For example, the invention can generate a hierarchical representation of a physical area such as a building or the like. The hierarchical representation is used to manage occupants of the physical area. For example, contact information for occupants can be maintained and associated with a physical location, and/or directions can be provided from a starting point to a designated destination point. The hierarchical representation can be used to facilitate two-way communication between an occupant and an emergency responder during an emergency event. Further, a response plan can be defined for an emergency event and implemented when the emergency event is identified.

US 2007/159332 A1 discloses systems, methods, and devices for using body-worn RFID tags related instrumentation located in the premises where a monitored person is located to prevent or detect specific types of movements of the person, such as falls from which the person has not recovered, wandering, bed egress, attempted room egress, and medication errors. The body-worn RFID tags may include an upper body RFID tag located in a wrist band and a lower body RFID tag located in a sock worn by the monitored person. The RFID instrumentation located in the premises may include one or more antennas located in the floor, door, bed frame, and mattress. The systems may also activate response actions upon detecting specified movements, such as sending an alert message to a patient monitoring system, activating an alarm, activating an camera, and/or playing a recorded message to the person.

WO 2010/117849 A2 discloses a method and system for marshaling resources needed to search for a missing child, declaring a missing child incident, coordinating a search for the missing child, tracking the progress of the search, locating the missing child, and recovering the missing child.

WO 2007/145890 A2 discloses a system with wireless fixed and portable sensors, the system being configured to track the locations of persons carrying the portable sensors and checking whether the persons carrying the portable sensors gather at mustering locations during emergencies, wherein the tracked persons are displayed with their respective positions on a map of the facility.

The invention is defined in the independent claims. Preferred embodiments are set out in the dependent claims.

### BRIEF DESCRIPTION OF THE DRAWINGS

FIG. 1 is a simplified block diagram of a safety system shown generally in accordance with an illustrated embodiment;
FIG. 2 depicts a monitoring panel and sensor of the system of FIG. 1; and
FIG. 3 is a flow chart of steps used by the system of FIG. 1 .

### DETAILED DESCRIPTION OF AN ILLUSTRATED EMBODIMENT

While embodiments can take many different forms, specific embodiments thereof are shown in the drawings and will be described herein in detail with the understanding that the present disclosure is to be considered as an exemplification of the principles hereof, as well as the best mode of practicing same. No limitation to the specific embodiment illustrated is intended.

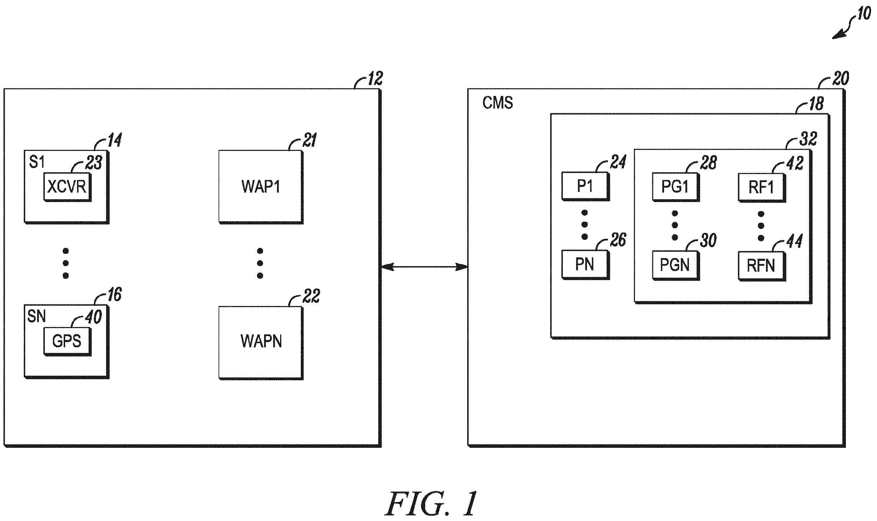

FIG. 1 is a block diagram of a safety system 10 shown generally in accordance with an illustrated embodiment. Included within the safety system is a number of sensing devices or sensors 14, 16 that detect threats within a secured area 12. The sensing devices are coupled to a monitoring panel 18 within a central monitoring station 20 via one or more wireless access points 21, 22 located within the secured area.

The monitoring panel and sensing devices communicate using a wireless format. In this regard, a transceiver 23 within each of the sensing devices exchanges messages with the monitoring panel through a respective wireless access point 21, 22.

The monitoring panel and sensors also include circuitry that incorporate certain monitoring and communication protocols discussed in more detail below. The circuitry includes one or more processing apparatus (processors) 24, 26 that each operate under control of one or more respective computer programs 28, 30 loaded from a non-transient computer readable medium (memory) 32. As used herein, reference to a step of a program is also reference to the processor that executed that step.

The sensors may be structured for any of a number of different objectives. For example, some of the sensors may environmental sensors (e.g., fire, smoke, natural gas, toxic gases, etc.). In these cases, a corresponding environmental or alarm processor may monitor a state of each of these sensors.

Operating in conjunction with the alarm processor is a status processor that evaluates the threat posed by activation of each sensor. In this regard, the threat posed by activation of any sensor is evaluated via the content of a response file 42, 44.

Under one particular illustrated embodiment, at least some of the sensors are portable wireless devices worn by (e.g., attached to the clothing of) persons located within portions of the secured area. There portable sensors include one or more detectors that detect environmental threats (e.g., smoke, carbon monoxide, heat, toxic gases, explosive gases, etc.).

Other stationary sensors are placed throughout the secured area to also detect environmental threats. Input from the portable and stationary sensors are used to detect localized threats within the secured area.

In the case of environmental threats (e.g., fire, carbon monoxide, etc.), the status processor, an environmental processor and alarm processor are programmed to immediately set an alarm upon detection of a threat. The status processor also sets a flag to identify and confirm evacuation of the affected area.

For example, each of the portable wireless sensors includes a geographic positioning device 40. The geographic positioning system may be a Global Positioning System (GPS) or may be based upon other types of devices. In response to a detected environmental threat, a positioning processor responds to the flag of the status processor by sending a location request to each of the portable sensors. Each of the geographic positioning devices may respond with a set of geographic coordinates that define the location of the device (and person) within the secured area.

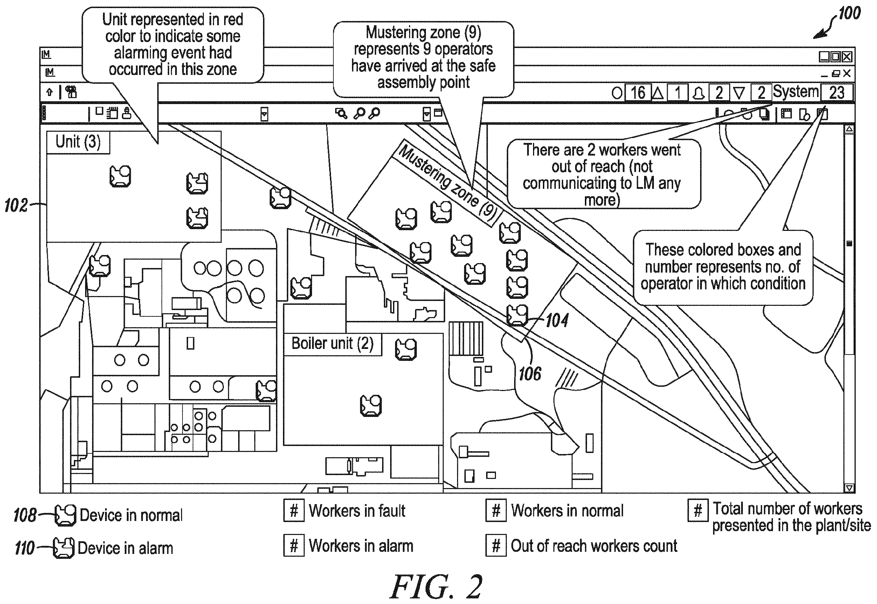

Operating in conjunction with the positioning processor is a mapping processor that generates a map of the secured area from an associated map file. FIG. 2 depicts a screen 100 showing a map of the secured area generated by the mapping processor and shown on the display of the user interface. Within the map file, the authorized person has previously identified a number of predefined (e.g., work) areas or zones 102 based upon known hazards associated with that identified area. The authorized person also has previously identified a number of mustering zones 106 into which evacuated persons may escape for safety and a list of persons authorized to enter each of the predefined zones or the secured area in general.

Shown along the bottom of the screen of FIG. 2 is a key for understanding the appearance of the icons associated with portable devices carried by persons within the secured area. For example, a first icon 108 depicts the appearance of a portable device that would be shown within the map when the associated sensor has not detected a threat. A second icon 108 shows how the portable devices are shown within the map when the associated sensor has detected a threat.

Under the illustrated embodiment, the alarm processor detects threats and the location of detected threats based upon the known location of stationary sensors or upon the location information from portable device. Upon detecting a threat, the alarm processor first retrieves a response file 42, 44 based upon the type of sensor activated and the detected threat involved. For example, a threat presented by activation of a toxic gas detector may be different that the threat presented by detection of heat. The response file for activation of a toxic gas sensor may require immediate activation while activation of a heat sensor may simply present an alert on the user interface requiring that safety personnel go to the location of the switch and investigate the threat.

In addition, a threat based upon a measured environmental factor may have a variable response based upon its location within the secured area and upon the predefined zones, if any, associated with the threat. For example, some environmental threats may require evacuation while other threats would not. Upon detection of an environmental threat in one of defined areas, the zone is highlighted along with an associated mustering area.

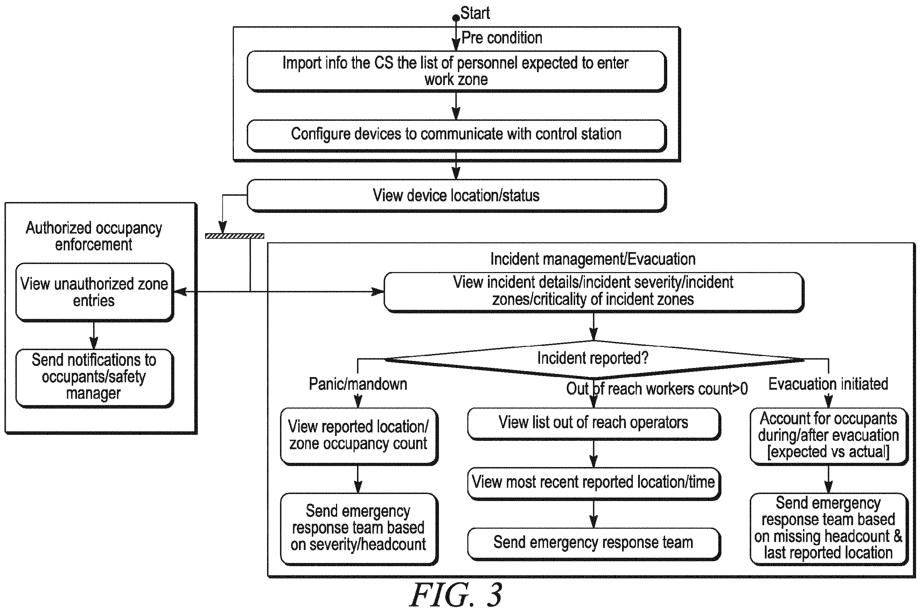

FIG. 3 depicts a flow chart of steps performed by one or more of the processors and displayed on the user interface. As shown in FIG. 3 , an evacuation processor first imports information from the response files including a list of persons authorized to be within the secured area or any zone thereof. The mapping processor also presents a map of the secured area showing each person on the map. In this regard, the location processor retrieves the geographic coordinates of each person and compare them with the geographic coordinates of the secured area and any defined zones within the secured area to identify the relative location of each person within the secured area. A presentation processor then depicts an icon 108 of each person at their identified geographic location within the map.

Operating in the background is a tracking processor that compares the current location of each person carrying a portable sensor with a set of authorized locations previously provided by the authorized person through the user interface. In non-alarm situations, where a discrepancy is detected (indicating that a person authorized to be within the secured area but not authorized to be within one of the predefined zones), a notification is provided on the screen 100. Notification may also be provided to the person through a speaker on the portable device. This notification may be in the form of a voice message identifying the person, the location and providing instructions to leave the area.

Upon detection of an environmental threat, the alarm processor presents details of the threat on the map of the screen 100. In this case, a predefined area 102 in which the event is detected is highlighted as shown in FIG. 2 . If the response file provides instructions that an evacuation is indicated, then the alarm processor provides instructions over a public address system within the secured area (or effected zone) to leave the affected area and report to the mustering zone.

As part of this process, the tracking processor retrieves a list of persons that are within the secured area and begin tracking the movement of each respective person. If a person is initially detected as being immobile (i.e., does not show any movement after issuance of the evacuation order), then an identifier of the person and the person's location is added to a panic/man down list. If the lack of movement continues, then an alert is issued on the user interface that an emergency response team should be dispatched to the location of the person. This may be based upon the detection of a single immobile person or based upon headcount.

The tracking processor also forms a second list of any missing persons known to be carrying a portable sensor that is not reporting its geographic location. This may be because the portable device has been collaterally damaged as a direct or indirect result of the occurrence of the threat.

In this case, the tracking processor retrieves the geographic location most recently reported by the person's portable sensor as a first indication of the missing person's location. If the portable device does not report an updated location within a predetermined time period, then the tracking processor provides an alert on the screen indicating that an emergency response team should be sent to the last known location of the person.

The evacuation processor receives information from the tracking processor and depicts the location of each person on the map along with indication of the state of the sensor provided by the portable detector carried by the person. As each person arrives within the mustering zone, an identifier of the person is added to a list of safely evacuated person. Those persons outside of the mustering zone are shown in their then current location on the map.

It should be noted that any person outside of the mustering zone could be subsequently added to the man down list or missing persons (can't be reached) list. This provides a real time view of the status of evacuation. For example, emergency personnel may be dispatched first to persons located within the highlighted zone of FIG. 2 while persons outside of the highlighted zones (contained in the man down list or can't be reached list) are helped after the highlighted area has been cleared of personnel.

The system tracks missing persons via their proximity to other persons. A processor of a safety system first identifies a missing person within a secured area of the safety system via a portable wireless sensor carried by the missing person and then identifies a last known location of the missing person via a most recent signal from the wireless sensor. Next, a processor identifies any nearby persons of the missing person via a portable wireless sensor carried by each of the nearby persons during a time of the most recent signal from the wireless sensor of the missing person. Finally, a processor determines a status of the portable wireless sensor of the missing person at the time of the most recent signal from the missing person. By knowing a status of the sensor at the time a person went missing, safety personnel are able to better determine a likely status of the person. Similarly, by identifying any nearby persons, safety personnel are able to contact those nearby persons to better able determine a likely whereabouts of the missing person.

The system offers a number of advantages over prior systems. For example, the display of FIG. 2 may contain a time indicator of the time interval since the event was first detected. In addition, since the system operates based upon fixed and portable sensors, the area highlighted can be expanded in real time as the affected area expands.

For search and rescue personnel, the display offers emergency personnel the ability to view the nature of the incident, the time since the incident occurred and the number of personnel remaining in the area of the incident. This allows search and rescue personnel to better estimate the number of first responders necessary to help the injured.

The system helps in safety maintenance by providing a historical headcount or number of occupants in any given zone. This may be important in being able to determine the size of exits and number of exits to ensure quick evacuations.

The system also provides proof of compliance for safety audits (as part of a post incident analysis or normal safety audit). This proof can be used for establishing compliance with internal/external OSHA/NIOSH agencies.

The system has a more immediate effect in verifying the headcount in the mustering zone in case of an incident or emergency. This can be important for post incident analysis especially where the headcount is provided on a minute by minute basis since detection of the incident. These records can be maintained as proof for OSHA/NIOSH compliance.

According to a general, non-claimed embodiment, the system includes processing that incorporates the steps of a first file within a non-transitory computer readable medium defining a set of geographic coordinates of a work area, a second file within a non-transitory computer readable medium defining a set of geographic coordinates of a mustering zone, a plurality of portable wireless sensors, each having a geographic positioning system, each carried by a person within the work area and each determining its geographic location, an environmental monitoring system detecting a threat within the work area, a processor detecting a location of each of the plurality of wireless sensors and a processor generating an alert for each of the plurality of portable sensors that have not arrived within the mustering area within a predetermined time after the detected threat.

According to an alternative, general, non-claimed embodiment, the system includes a first file within a non-transitory computer readable medium that defines a set of geographic coordinates of a work area, a second file within a non-transitory computer readable medium that defines a set of geographic coordinates of a mustering zone, a plurality of portable wireless sensors, each having a geographic positioning system and each carried by a person within the work area, an environmental monitoring system that detects a threat within the work area, a processor that detects a location of each of the plurality of wireless sensors and a processor that generates an alert for each of the plurality of portable sensors that have not arrived within the mustering area within a predetermined time after the detected threat.

As a still further alternative, general, non-claimed embodiment, the system includes a safety system that protects a secured area, a first file within a non-transitory computer readable medium of the safety system that defines a set of geographic coordinates of a work area within the secured area, a second file within a non-transitory computer readable medium of the safety system that defines a set of geographic coordinates of a mustering zone within the secured area, a plurality of portable wireless sensors, each having a geographic positioning system and each carried by a person within the work area, an environmental monitoring system of the safety system that detects a threat within the work area, a processor that detects a location of each of the plurality of wireless sensors and a processor that generates an alert for each of the plurality of portable sensors that have not arrived within the mustering area within a predetermined time after the detected threat

From the foregoing, it will be observed that numerous variations and modifications may be effected. It is, of course, intended to cover by the appended claims all such modifications as fall within the scope of the claims.

## Claims

1. A safety system (10), comprising:
a plurality of wireless sensors (14, 16) configured to detect environmental threats, of which at least some are portable wireless sensors having a geographic positioning device (40) and each configured to be worn by a person within a secured area (12); and
a central monitoring station (20) comprising:
a monitoring panel (18) configured to communicate wirelessly with the plurality of wireless sensors (14, 16) via one or more wireless access points (21, 22) located within the secured area (12), wherein the monitoring panel (18) includes a plurality of processors (24, 26) comprising:
a mapping processor configured to:
generate a map of the secured area (12) on a screen (100) based on a map file, wherein the map file identifies predefined areas(102) within the secured area (12) based upon known hazards associated with the predefined areas (102), and wherein the map file further identifies a mustering zone (106) within the secured area (12),
wherein the predefined areas (102) and mustering zones (106) are pre-identified by an authorized person, and the map file includes geographic coordinates of the predefined areas (102) and mustering zones (106), and a list of persons authorized to enter each predefined area (102), wherein the mapping processor is configured to operate in conjunction with a positioning processor;
an alarm processor configured to:
detect threats and the location of detected threats based upon a known location of the wireless sensors or upon a location information from the portable wireless sensors, and, upon detecting the threat, retrieve a response file (42, 44) based upon a type of sensor activated and the detected threat involved;
highlight, on the screen (100), a predefined area (102) in which a threat is detected; and provide instructions over a public address system within the secured area (12) to leave the predefined area (102) and report to the mustering zone (106), if the response file provides instructions that an evacuation is indicated;
a status processor configured to:
evaluate the detected threat based on the response file (42, 44); and
set a flag to identify and confirm evacuation of the predefined area (102);
the positioning processor configured to:
in response to the detected threat and to the flag, send a location request to each of the portable wireless sensors (14, 16);
a tracking processor, upon detection of a threat, configured to:
retrieve a first list of persons within the secured area (12) and begin tracking movement of each person,
if a person is initially detected as immobile after issuance of an evacuation order, add an identifier of the person and a person's location to a panic/man down list,
if lack of movement continues, issue an alert on the screen indicating that an emergency response team should be dispatched to the location of the person;
form a second list identifying any missing person within the secured area (12) carrying a portable wireless sensor that is not reporting its location;
identify a last known location of a missing person via a most recent location signal from a first portable wireless sensor carried by the missing person; and
provide an alert on the screen (100) indicating that an emergency response team should be sent to the last known location of the missing person if the portable wireless sensor carried by the missing person does not report an updated location within a predetermined time period;
a further processor configured to:
identify any nearby persons of the missing person via at least one second portable wireless sensor carried by each of the nearby persons during a time of the most recent signal from the first portable wireless sensor of the missing person;
another further processor configured to:
determine a status of the first portable wireless sensor of the missing person at the time of the most recent signal from the missing person; and
an evacuation processor configured to:
receive information from the tracking processor; and
depict the location of each person on the map with an indication of the state of the sensor provided by the portable wireless sensor worn by the person,
as each person arrives within the mustering zone (106), add an identifier of the person to a list of safely evacuated persons, and display on the map those persons outside of the mustering zone (106) at their then current location.

2. A method of tracking persons via their proximity to other persons in a safety system (10) comprising a plurality of wireless sensors (14, 16) configured to detect environmental threats, of which at least some are portable wireless sensors, and a central monitoring station (20), each portable wireless sensor having a geographic positioning device (40) and each are configured to be worn by a person within a secured area (12), the central monitoring station (20) comprising a monitoring panel (18) configured to communicate wirelessly with the plurality of wireless sensors (14, 16) via one or more wireless access points (21, 22) located within the secured area (12), the method comprising:
generating, by a mapping processor of the monitoring panel, a map of the secured area (12) on a screen (100) based on a map file, wherein the map file identifies predefined areas (102) within the secured area (12) based upon known hazards associated with the predefined areas (102), and wherein the map file further identifies a mustering zone (106) within the secured area (12), wherein the predefined areas (102) and mustering zones (106) are pre-identified by an authorized person, and the map file includes geographic coordinates of the predefined areas (102) and mustering zones (106), and a list of persons authorized to enter each predefined area (102), wherein the mapping processor operates in conjunction with a positioning processor;
detecting, by an alarm processor of the monitoring panel, threats and the location of detected threats based upon a known location of the wireless sensors or upon a location information from the portable wireless sensors, retrieving, by the alarm processor, upon detecting the threat, a response file (42, 44) based upon a type of sensor activated and the detected threat involved;
highlighting, on the screen (100), by the alarm processor of the monitoring panel, a predefined area (102) in which a threat is detected;
providing, by the alarm processor, instructions over a public address system within the secured area (12) to leave the predefined area (102) and report to the mustering zone (106), if the response file provides instructions that an evacuation is indicated;
evaluating, by a status processor of the monitoring panel, the detected threat based on the response file (42, 44);
setting, by the status processor, a flag to identify and confirm evacuation of the predefined area (102);
sending, by a positioning processor of the monitoring panel, in response to the detected threat and to the flag, a location request to each of the portable wireless sensors (14, 16);
retrieving, by a tracking processor of the monitoring panel, upon detection of a threat, a first list of persons within the secured area (12) and beginning, by the tracking processor, tracking movement of each person, wherein if a person is initially detected as immobile after issuance of an evacuation order, the tracking processor adds an identifier of the person and a person's location to a panic/man down list, wherein if lack of movement continues, the tracking processor issues an alert on the screen indicating that an emergency response team should be dispatched to the location of the person;
forming, by the tracking processor of the monitoring panel, a second list identifying any missing person within the secured area (12) carrying a portable wireless sensor that is not reporting its location,
identifying, by the tracking processor, a last known location of a missing person via a most recent location signal from a first portable wireless sensor carried by the missing person;
providing, by the tracking processor, an alert on the screen (100) indicating that an emergency response team should be sent to the last known location of the missing person if the portable wireless sensor carried by the missing person does not report an updated location within a predetermined time period;
identifying, by a further processor of the monitoring panel, any nearby persons of the missing person via at least one second portable wireless sensor carried by each of the nearby persons during a time of the most recent signal from the first portable wireless sensor of the missing person;
determining, by another further processor of the monitoring panel, a status of the first portable wireless sensor of the missing person at the time of the most recent signal from the missing person; and
receiving, by an evacuation processor of the monitoring panel, information from the tracking processor; and depicting, by the evacuation processor, the location of each person on the map with an indication of the state of the sensor provided by the portable wireless sensor worn by the person; adding, by the evacuation processor, as each person arrives within the mustering zone (106), an identifier of the person to a list of safely evacuated persons, and displaying, by the evacuation processor, on the map those persons outside of the mustering zone (106) at their then current location.

3. The method as in claim 2, wherein the detected threat comprises a gas reading.

4. The method as in claim 2, wherein the detected threat comprises a smoke reading.

## Patentansprüche

1. Sicherheitssystem (10), umfassend:
eine Mehrzahl von drahtlosen Sensoren (14, 16), die dazu konfiguriert sind, Bedrohungen in der Umgebung zu detektieren, wovon mindestens einige tragbare drahtlose Sensoren sind, die eine geografische Positionierungsvorrichtung (40) aufweisen und jeweils dazu konfiguriert sind, von einer Person innerhalb eines gesicherten Bereichs (12) getragen zu werden; und
eine zentrale Überwachungsstation (20) umfassend:
ein Überwachungspanel (18), das dazu konfiguriert ist, drahtlos mit der Mehrzahl von drahtlosen Sensoren (14, 16) über einen oder mehrere drahtlose Zugangspunkte (21, 22) zu kommunizieren, die sich innerhalb des gesicherten Bereichs (12) befinden, wobei das Überwachungspanel (18) eine Mehrzahl von Prozessoren (24, 26) beinhaltet, umfassend:
einen Kartierungsprozessor, der dazu konfiguriert ist:
eine Karte des gesicherten Bereichs (12) auf einem Bildschirm (100) basierend auf einer Kartendatei zu generieren, wobei die Kartendatei vordefinierte Bereiche (102) innerhalb des gesicherten Bereichs (12) basierend auf bekannten Gefahren, die mit den vordefinierten Bereichen (102) zusammenhängen, identifiziert und wobei die Kartendatei ferner eine Sammelzone (106) innerhalb des gesicherten Bereichs (12) identifiziert,
wobei die vordefinierten Bereiche (102) und Sammelzonen (106) von einer befugten Person voridentifiziert werden und die Kartendatei geografische Koordinaten der vordefinierten Bereiche (102) und Sammelzonen (106) sowie eine Liste der Personen beinhalten, die zum Betreten jedes vordefinierten Bereichs (102) befugt sind, wobei der Kartierungsprozessor dazu konfiguriert ist, in Verbindung mit einem Positionierungsprozessor zu arbeiten;
einen Alarmprozessor, der dazu konfiguriert ist:
Bedrohungen und den Standort von detektierten Bedrohungen basierend auf einem bekannten Standort der drahtlosen Sensoren oder auf Standortinformationen der tragbaren drahtlosen Sensoren zu detektieren und nach Detektieren der Bedrohung eine Antwortdatei (42, 44) abzurufen, basierend auf einem Typ des aktivierten Sensors und der involvierten detektierten Bedrohung;
einen vordefinierten Bereich (102), in dem eine Bedrohung detektiert wird, auf dem Bildschirm (100) hervorzuheben; und Anweisungen über eine Lautsprecheranlage innerhalb des gesicherten Bereichs (12) bereitzustellen, den vordefinierten Bereich (102) zu verlassen und sich in der Sammelzone (106) zu melden, wenn die Antwortdatei Anweisungen bereitstellt, dass eine Evakuierung angegeben ist;
einen Statusprozessor, der dazu konfiguriert ist:
die detektierte Bedrohung basierend auf der Antwortdatei (42, 44) zu bewerten; und
ein Flag zu setzen, um die Evakuierung des vordefinierten Bereichs (102) zu identifizieren und zu bestätigen;
wobei der Positionierungsprozessor dazu konfiguriert ist:
als Antwort auf die detektierte Bedrohung und das Flag eine Standortanfrage an jeden der tragbaren drahtlosen Sensoren (14, 16) senden;
einen Verfolgungsprozessor, der bei Detektion einer Bedrohung dazu konfiguriert ist,
eine erste Liste von Personen innerhalb des gesicherten Bereichs (12) abzurufen und mit dem Verfolgen von Bewegungen jeder einzelnen Person zu beginnen,
wenn eine Person zunächst nach Ausgabe eines Evakuierungsbefehls als unbeweglich detektiert wird, einen Identifikator der Person und den Standort der Person zu einer Panik-/Man-Down-Liste hinzuzufügen,
falls die Bewegungslosigkeit anhält, eine Warnmeldung auf dem Bildschirm auszugeben, die angibt, dass ein Notfallteam zum Standort der Person entsandt werden sollte;
eine zweite Liste zu bilden, in der jede vermisste Person innerhalb des gesicherten Bereichs (12) identifiziert ist, die einen tragbaren drahtlosen Sensor mitführt, der seinen Standort nicht meldet;
den letzten bekannten Standort einer vermissten Person über ein letztes Standortsignal eines ersten tragbaren drahtlosen Sensors zu identifizieren, den die vermisste Person mitführt; und
eine Warnmeldung auf dem Bildschirm (100) bereitzustellen, die angibt, dass ein Notfallteam zum letzten bekannten Standort der vermissten Person entsandt werden sollte, falls der von der vermissten Person mitgeführte tragbare drahtlose Sensor innerhalb eines vorbestimmten Zeitraums keinen aktualisierten Standort meldet;
einen weiteren Prozessor, der dazu konfiguriert ist:
Personen in der Nähe der vermissten Person über mindestens einen zweiten tragbaren drahtlosen Sensor zu identifizieren, den jede dieser Personen in der Nähe während einer Zeit des letzten Signals des ersten tragbaren drahtlosen Sensors der vermissten Person mitführt;
einen anderen weiteren Prozessor, der dazu konfiguriert ist:
einen Status des ersten tragbaren drahtlosen Sensors der vermissten Person zu der Zeit des letzten von der vermissten Person gesendeten Signals zu bestimmen; und
einen Evakuierungsprozessor, der dazu konfiguriert ist:
Informationen vom Verfolgungsprozessor zu empfangen; und
den Standort jeder Person auf der Karte zu zeigen, mit einer Angabe des Status des Sensors, der von dem von der Person getragenen tragbaren drahtlosen Sensor bereitgestellt wird,
sobald jede Person innerhalb der Sammelzone (106) eintrifft, einen Identifikator der Person zu einer Liste der sicher evakuierten Personen hinzuzufügen und auf der Karte die Personen außerhalb der Sammelzone (106) an ihrem jeweiligen aktuellen Standort anzuzeigen.

2. Verfahren zum Verfolgen von Personen über ihre Nähe zu anderen Personen in einem Sicherheitssystem (10), das eine Mehrzahl von drahtlosen Sensoren (14, 16) umfasst, die dazu konfiguriert sind, Bedrohungen in der Umgebung zu detektieren, wovon mindestens einige tragbare drahtlose Sensoren sind, sowie eine zentrale Überwachungsstation (20), wobei jeder tragbare drahtlose Sensor eine geografische Positionierungsvorrichtung (40) aufweist und jeder dazu konfiguriert ist, von einer Person innerhalb eines gesicherten Bereichs (12) getragen zu werden, wobei die zentrale Überwachungsstation (20) ein Überwachungspanel (18) umfasst, das dazu konfiguriert ist, drahtlos mit der Mehrzahl von drahtlosen Sensoren (14, 16) über einen oder mehrere drahtlose Zugangspunkte (21, 22) zu kommunizieren, die sich innerhalb des gesicherten Bereichs (12) befinden, wobei das Verfahren umfasst:
Generieren einer Karte des gesicherten Bereichs (12) auf einem Bildschirm (100) durch einen Kartierungsprozessor des Überwachungspanels basierend auf einer Kartendatei, wobei die Kartendatei vordefinierte Bereiche (102) innerhalb des gesicherten Bereichs (12) basierend auf bekannten Gefahren, die mit den vordefinierten Bereichen (102) zusammenhängen, identifiziert und wobei die Kartendatei ferner eine Sammelzone (106) innerhalb des gesicherten Bereichs (12) identifiziert, wobei die vordefinierten Bereiche (102) und Sammelzonen (106) von einer befugten Person voridentifiziert werden und die Kartendatei geografische Koordinaten der vordefinierten Bereiche (102) und Sammelzonen (106) sowie eine Liste der Personen beinhaltet, die zum Betreten jedes vordefinierten Bereichs (102) befugt sind, wobei der Kartierungsprozessor in Verbindung mit einem Positionierungsprozessor arbeitet;
Detektieren von Bedrohungen und des Standorts von detektierten Bedrohungen basierend auf einem bekannten Standort der drahtlosen Sensoren oder auf Standortinformationen der tragbaren drahtlosen Sensoren durch einen Alarmprozessor des Überwachungspanels, Abrufen, nach dem Detektieren der Bedrohung, einer Antwortdatei (42, 44) durch den Alarmprozessor, basierend auf einem Typ des aktivierten Sensors und der involvierten detektierten Bedrohung;
Hervorheben eines vordefinierten Bereichs (102), in dem eine Bedrohung detektiert wird, auf dem Bildschirm (100) durch den Alarmprozessor des Überwachungspanels;
Bereitstellen von Anweisungen durch den Alarmprozessor über eine Lautsprecheranlage innerhalb des gesicherten Bereichs (12), den vordefinierten Bereich (102) zu verlassen und sich in der Sammelzone (106) zu melden, wenn die Antwortdatei Anweisungen bereitstellt, dass eine Evakuierung angegeben ist;
Bewerten der detektierten Bedrohung durch einen Statusprozessor des Überwachungspanels basierend auf der Antwortdatei (42, 44);
Setzen eines Flags, um die Evakuierung des vordefinierten Bereichs (102) zu identifizieren und zu bestätigen, durch den Statusprozessor;
Senden einer Standortanfrage an jeden der tragbaren drahtlosen Sensoren (14, 16) als Antwort auf die detektierte Bedrohung und das Flag durch einen Positionierungsprozessor des Überwachungspanels;
Abrufen einer ersten Liste von Personen innerhalb des gesicherten Bereichs (12) durch einen Verfolgungsprozessor des Überwachungspanels bei Detektion einer Bedrohung und Beginnen der Verfolgung der Bewegung jeder Person durch den Verfolgungsprozessor, wobei, falls eine Person nach Erteilung eines Evakuierungsbefehls zunächst als unbeweglich detektiert wird, der Positionierungsprozessor einen Identifikator der Person und den Standort einer Person zu einer Panik-/Man-Down-Liste hinzufügt, wobei, falls die Bewegungslosigkeit anhält, der Verfolgungsprozessor auf dem Bildschirm eine Warnmeldung ausgibt, die angibt, dass ein Notfallteam zum Standort der Person entsandt werden sollte;
Bilden einer zweiten Liste, in der jede vermisste Person innerhalb des gesicherten Bereichs (12) identifiziert ist, die einen tragbaren drahtlosen Sensor mitführt, der seinen Standort nicht meldet, durch den Verfolgungsprozessor des Überwachungspanels,
Identifizieren eines letzten bekannten Standorts einer vermissten Person über ein letztes Standortsignal eines ersten tragbaren drahtlosen Sensors, den die vermisste Person mitführt, durch den Verfolgungsprozessor;
Bereitstellen einer Warnmeldung auf dem Bildschirm (100) durch den Verfolgungsprozessor, die angibt, dass ein Notfallteam zum letzten bekannten Standort der vermissten Person entsandt werden sollte, falls der von der vermissten Person mitgeführte tragbare drahtlose Sensor keinen aktualisierten Standort innerhalb eines vorbestimmten Zeitraums meldet;
Identifizieren von Personen in der Nähe der vermissten Person durch einen weiteren Prozessor des Überwachungspanels über mindestens einen zweiten tragbaren drahtlosen Sensor, den jede der Personen in der Nähe während einer Zeit des letzten Signals des ersten tragbaren drahtlosen Sensors der vermissten Person mitführt;
Bestimmen eines Status des ersten tragbaren drahtlosen Sensors der vermissten Person zu der Zeit des letzten Signals von der vermissten Person durch einen anderen weiteren Prozessor des Überwachungspanels; und
Empfangen von Informationen vom Verfolgungsprozessor durch einen Evakuierungsprozessor des Überwachungspanels; und
Zeigen des Standorts jeder Person auf der Karte mit einer Angabe des Status des Sensors, der von dem von der Person getragenen tragbaren drahtlosen Sensor bereitgestellt wird, durch den Evakuierungsprozessor; Hinzufügen eines Identifikators der Person zu einer Liste sicher evakuierter Personen durch den Evakuierungsprozessor, sobald jede Person in der Sammelzone (106) eintrifft, und Anzeigen der Personen außerhalb der Sammelzone (106) an ihrem jeweiligen aktuellen Standort auf der Karte durch den Evakuierungsprozessor.

3. Verfahren nach Anspruch 2, wobei die detektierte Bedrohung eine Gasmessung umfasst.

4. Verfahren nach Anspruch 2, wobei die detektierte Bedrohung eine Rauchmessung umfasst.

## Revendications

1. Système de sécurité (10), comprenant :
une pluralité de capteurs sans fil (14, 16) configurés pour détecter des menaces environnementales, dont au moins certains sont des capteurs sans fil portables comportant un dispositif de positionnement géographique (40) et chacun étant configuré pour être porté par une personne à l'intérieur d'une zone sécurisée (12) ; et
une station centrale de surveillance (20) comprenant :
un panneau de surveillance (18) configuré pour communiquer sans fil avec la pluralité de capteurs sans fil (14, 16) par l'intermédiaire d'un ou de plusieurs points d'accès sans fil (21, 22) situés à l'intérieur de la zone sécurisée (12), dans lequel le panneau de surveillance (18) inclut une pluralité de processeurs (24, 26) comprenant :
un processeur de cartographie configuré pour :
générer une carte de la zone sécurisée (12) sur un écran (100) sur la base d'un fichier de carte, dans lequel le fichier de carte identifie des zones prédéfinies (102) à l'intérieur de la zone sécurisée (12) sur la base de dangers connus associés aux zones prédéfinies (102), et dans lequel le fichier de carte identifie en outre une zone de rassemblement (106) à l'intérieur de la zone sécurisée (12),
dans lequel les zones prédéfinies (102) et les zones de rassemblement (106) sont pré-identifiées par une personne autorisée, et le fichier de carte inclut les coordonnées géographiques des zones prédéfinies (102) et des zones de rassemblement (106), ainsi qu'une liste de personnes autorisées à pénétrer dans chaque zone prédéfinie (102), dans lequel le processeur de cartographie est configuré pour fonctionner conjointement avec un processeur de positionnement ;
un processeur d'alarme configuré pour :
détecter des menaces et la localisation des menaces détectées sur la base d'une localisation connue des capteurs sans fil ou sur la base d'informations de localisation provenant des capteurs sans fil portables, et, lors de la détection de la menace, récupérer un fichier d'intervention (42, 44) sur la base d'un type de capteur activé et de la menace détectée concernée ;
mettre en évidence, sur l'écran (100), une zone prédéfinie (102) dans laquelle une menace est détectée ; et fournir des instructions par l'intermédiaire d'un système de sonorisation à l'intérieur de la zone sécurisée (12) afin de quitter la zone prédéfinie (102) et de rejoindre la zone de rassemblement (106), si le fichier d'intervention fournit des instructions indiquant qu'une évacuation est requise ;
un processeur d'état configuré pour :
évaluer la menace détectée sur la base du fichier d'intervention (42, 44) ; et
définir un indicateur afin d'identifier et de confirmer l'évacuation de la zone prédéfinie (102) ;
le processeur de positionnement étant configuré pour :
en réponse à la menace détectée et à l'indicateur, envoyer une requête de localisation à chacun des capteurs sans fil (14, 16) portables ;
un processeur de suivi configuré, lors de la détection d'une menace, pour :
récupérer une première liste de personnes à l'intérieur de la zone sécurisée (12) et commencer à suivre le déplacement de chaque personne,
si une personne est initialement détectée comme immobile après l'émission d'un ordre d'évacuation, ajouter un identifiant de la personne et la localisation de la personne à une liste des personnes en état de panique / à terre,
si l'absence de déplacement se poursuit, émettre une alerte sur l'écran indiquant qu'une équipe d'intervention d'urgence doit être envoyée à la localisation de la personne ;
former une deuxième liste identifiant toute personne manquante à l'intérieur de la zone sécurisée (12) portant un capteur sans fil portable qui ne transmet pas sa localisation ;
identifier une dernière localisation connue d'une personne manquante via un signal de localisation le plus récent provenant d'un premier capteur sans fil portable porté par la personne manquante ; et
fournir une alerte sur l'écran (100) indiquant qu'une équipe d'intervention d'urgence doit être envoyée à la dernière localisation connue de la personne manquante si le capteur sans fil portable porté par la personne manquante ne transmet pas une localisation mise à jour dans un délai prédéterminé ;
un processeur supplémentaire configuré pour :
identifier toutes les personnes à proximité de la personne manquante via au moins un deuxième capteur sans fil portable porté par chacune des personnes à proximité au moment du signal le plus récent provenant du premier capteur sans fil portable de la personne manquante ;
un autre processeur supplémentaire configuré pour :
déterminer un état du premier capteur sans fil portable de la personne manquante au moment du signal le plus récent provenant de la personne manquante ; et
un processeur d'évacuation configuré pour :
recevoir des informations provenant du processeur de suivi ; et
représenter la localisation de chaque personne sur la carte avec une indication de l'état du capteur fournie par le capteur sans fil portable porté par la personne,
à mesure que chaque personne arrive dans la zone de rassemblement (106), ajouter un identifiant de la personne à une liste de personnes évacuées en sécurité, et afficher sur la carte les personnes situées à l'extérieur de la zone de rassemblement (106) à leur localisation alors actuelle.

2. Procédé de suivi de personnes via leur proximité avec d'autres personnes dans un système de sécurité (10) comprenant une pluralité de capteurs sans fil (14, 16) configurés pour détecter des menaces environnementales, dont au moins certains sont des capteurs sans fil portables, et une station centrale de surveillance (20), chaque capteur sans fil portable comportant un dispositif de positionnement géographique (40) et chacun étant configuré pour être porté par une personne à l'intérieur d'une zone sécurisée (12), la station centrale de surveillance (20) comprenant un panneau de surveillance (18) configuré pour communiquer sans fil avec la pluralité de capteurs sans fil (14, 16) par l'intermédiaire d'un ou de plusieurs points d'accès sans fil (21, 22) situés à l'intérieur de la zone sécurisée (12), le procédé comprenant :
la génération, par un processeur de cartographie du panneau de surveillance, d'une carte de la zone sécurisée (12) sur un écran (100) sur la base d'un fichier de carte, dans laquelle le fichier de carte identifie des zones prédéfinies (102) à l'intérieur de la zone sécurisée (12) sur la base de dangers connus associés aux zones prédéfinies (102), et dans laquelle le fichier de carte identifie en outre une zone de rassemblement (106) à l'intérieur de la zone sécurisée (12), dans laquelle les zones prédéfinies (102) et les zones de rassemblement (106) sont pré-identifiées par une personne autorisée, et le fichier de carte inclut les coordonnées géographiques des zones prédéfinies (102) et des zones de rassemblement (106), ainsi qu'une liste de personnes autorisées à pénétrer dans chaque zone prédéfinie (102), dans laquelle le processeur de cartographie fonctionne conjointement avec un processeur de positionnement ;
la détection, par un processeur d'alarme du panneau de surveillance, de menaces et de la localisation des menaces détectées sur la base d'une localisation connue des capteurs sans fil ou sur la base d'informations de localisation provenant des capteurs sans fil portables, la récupération, par le processeur d'alarme, lors de la détection de la menace, d'un fichier d'intervention (42, 44) sur la base d'un type de capteur activé et de la menace détectée concernée ;
la mise en évidence, sur l'écran (100), par le processeur d'alarme du panneau de surveillance, d'une zone prédéfinie (102) dans laquelle une menace est détectée ;
la fourniture, par le processeur d'alarme, d'instructions par l'intermédiaire d'un système de sonorisation à l'intérieur de la zone sécurisée (12) afin de quitter la zone prédéfinie (102) et de rejoindre la zone de rassemblement (106), si le fichier d'intervention fournit des instructions indiquant qu'une évacuation est requise ;
l'évaluation, par un processeur d'état du panneau de surveillance, de la menace détectée sur la base du fichier d'intervention (42, 44) ;
la définition, par le processeur d'état, d'un indicateur afin d'identifier et de confirmer l'évacuation de la zone prédéfinie (102) ;
l'envoi, par un processeur de positionnement du panneau de surveillance, en réponse à la menace détectée et à l'indicateur, d'une requête de localisation à chacun des capteurs sans fil (14, 16) portables;
la récupération, par un processeur de suivi du panneau de surveillance, lors de la détection d'une menace, d'une première liste de personnes à l'intérieur de la zone sécurisée (12) et le commencement, par le processeur de suivi, du suivi du déplacement de chaque personne, dans laquelle, si une personne est initialement détectée comme immobile après l'émission d'un ordre d'évacuation, le processeur de suivi ajoute un identifiant de la personne et la localisation de la personne à une liste des personnes en état de panique / à terre, dans laquelle, si l'absence de déplacement se poursuit, le processeur de suivi émet une alerte sur l'écran indiquant qu'une équipe d'intervention d'urgence doit être envoyée à la localisation de la personne ;
la formation, par le processeur de suivi du panneau de surveillance, d'une deuxième liste identifiant toute personne manquante à l'intérieur de la zone sécurisée (12) portant un capteur sans fil portable qui ne transmet pas sa localisation,
l'identification, par le processeur de suivi, d'une dernière localisation connue d'une personne manquante via un signal de localisation le plus récent provenant d'un premier capteur sans fil portable porté par la personne manquante ;
la fourniture, par le processeur de suivi, d'une alerte sur l'écran (100) indiquant qu'une équipe d'intervention d'urgence doit être envoyée à la dernière localisation connue de la personne manquante si le capteur sans fil portable porté par la personne manquante ne transmet pas une localisation mise à jour dans un délai prédéterminé ;
l'identification, par un processeur supplémentaire du panneau de surveillance, de toutes les personnes à proximité de la personne manquante via au moins un deuxième capteur sans fil portable porté par chacune des personnes à proximité au moment du signal le plus récent provenant du premier capteur sans fil portable de la personne manquante ;
la détermination, par un autre processeur supplémentaire du panneau de surveillance, d'un état du premier capteur sans fil portable de la personne manquante au moment du signal le plus récent provenant de la personne manquante ; et
la réception, par un processeur d'évacuation du panneau de surveillance, d'informations provenant du processeur de suivi ; et
la représentation, par le processeur d'évacuation, de la localisation de chaque personne sur la carte avec une indication de l'état du capteur fournie par le capteur sans fil portable porté par la personne ; l'ajout, par le processeur d'évacuation, à mesure que chaque personne arrive dans la zone de rassemblement (106), d'un identifiant de la personne à une liste de personnes évacuées en sécurité, et l'affichage, par le processeur d'évacuation, sur la carte, des personnes situées à l'extérieur de la zone de rassemblement (106) à la localisation alors actuelle.

3. Procédé selon la revendication 2, dans lequel la menace détectée comprend une mesure de gaz.

4. Procédé selon la revendication 2, dans lequel la menace détectée comprend une mesure de fumée.
